# EUROPÄISCHE PATENTANMELDUNG

(11) **EP 4 307 436 A1**
(43) Veröffentlichungstag der Anmeldung: **17.01.2024**
(21) Anmeldenummer: 22185096.9
(22) Anmeldetag: 15.07.2022
(51) Int. Cl.: H01M 10/54, H01M 6/52

(54) **BATTERIE-VERARBEITUNGSANLAGE ZUM BEHANDELN FLÜSSIGELEKTROLYTHALTIGER BATTERIEN UND VERFAHREN ZUM BETREIBEN EINER SOLCHEN ANLAGE**

(71) Anmelder: Duesenfeld GmbH, 38176 Wendeburg (DE)
(72) Erfinder: Bußmann, Till, 30938 Burgwedel (DE)
(74) Vertreter: Gramm, Lins & Partner Patent- und Rechtsanwälte PartGmbB

(57) **Zusammenfassung**

Die Erfindung betrifft eine Batterie-Verarbeitungsanlage zum Behandeln flüssigelektrolythaltiger Batterien, mit einer Zerkleinerungsvorrichtung zum Zerkleinern der Batterien, einem Trocknungsbehälter zum Trocknen von zerkleinerten Batterien, sodass Lösungsmittel des Elektrolyten verdampft und Lösungsmitteldampf entsteht, und einem Aktivkohlefilter, der in Gasflussrichtung hinter der Trocknungsvorrichtung angeordnet ist, wobei die Erfindung eine Heizvorrichtung zum Heizen des Aktivkohlefilters aufweist, sodass im Aktivkohlefilter adsorbiertes Lösungsmittel desorbierbar ist, sodass Desorbatdampf entsteht, und einen Kondensator zum Kondensieren von Desorbatdampf angeordnet ist.

## Beschreibung

Die Erfindung betrifft eine Batterie-Verarbeitungsanlage zum Behandeln flüssigelektrolythaltiger Batterien, mit (a) einer Zerkleinerungsvorrichtung zum Zerkleinern der Batterien, (b) einem Trocknungsbehälter zum Trocknen von zerkleinerten Batterien, sodass Lösungsmittel des Elektrolyten verdampft und Lösungsmitteldampf entsteht, und (c) einem Aktivkohlefilter, der in Gasflussrichtung hinter der Trockenvorrichtung angeordnet ist.

Batterie-Verarbeitungsanlagen werden verwendet, um Batterien, die einen flüssigen Elektrolyten enthalten, zu verarbeiten. Insbesondere werden Batterie-Verarbeitungsanlagen verwendet, um Bestandteile der Batterien, insbesondere Lösungsmittel des Elektrolyten, zurückzugewinnen.

Aus der DE 10 2016 120 046 A1 ist eine Batterie-Verarbeitungsanlage bekannt, bei der durch Anlegen eines Vakuums an zerkleinertem Zerkleinerungsmaterial, das durch Zerkleinern von Batterien erhalten wurde, verdampft und danach kondensiert wird. Der Kondensator zum Kondensieren ist an einer Vakuumpumpe angeordnet, mit der das Vakuum erzeugt wird, das an das Zerkleinerungsmaterial angelegt wird. In Gasflussrichtung hinter dem Kondensator und vor der Vakuumpumpe ist ein Aktivkohlefilter angeordnet. Dieser Aktivkohlefilter dient zum Reinigen des Gases beispielsweise von Fluorwasserstoff und fluororganischen Verbindungen.

Der Erfindung liegt die Aufgabe zugrunde, das Recycling von flüssigelektrolythaltigen, insbesondere lösungsmittelhaltigen, Batterien zu verbessern.

Die Erfindung löst das Problem durch eine gattungsgemäße Batterie-Verarbeitungsanlage, die eine Heizvorrichtung zum Heizen des Aktivkohlefilters aufweist, sodass im Aktivkohlefilter adsorbiertes Lösungsmittel desorbierbar ist, sodass gasförmiges Lösungsmittel entsteht, und einen Kondensator, der zum Kondensieren von desorbiertem gasförmigem Lösungsmittel angeordnet ist, aufweist.

Die Erfindung löst das Problem zudem durch eine gattungsgemäße Batterie-Verarbeitungsanlage, die einen Vakuumerzeuger, der mit einem Saug-Eingang mit dem Aktivkohlefilter zum Anlegen eines Regenerierdrucks von höchstens 50 hPa, insbesondere höchstens 10 hPa, verbindbar angeordnet ist, aufweist. Es ist vorteilhaft, nicht aber notwendig, dass eine solche Batterie-Verarbeitungsanlage eine Heizvorrichtung zum Heizen des Aktivkohlefilters aufweist, sodass im Aktivkohlefilter adsorbiertes Lösungsmittel desorbierbar ist, und einen Kondensator, der zum Kondensieren von desorbiertem gasförmigem Lösungsmittel angeordnet ist, aufweist.

Gemäß einem zweiten Aspekt löst die Erfindung das Problem durch ein Verfahren zum Betreiben einer solchen Batterie-Verarbeitungsanlage, mit den Schritten (i) Ansteuern der Umschaltvorrichtung, sodass der Vakuumerzeuger mit dem Aktivkohlefilter verbunden wird, (ii) Ansteuern der Heizvorrichtung, sodass der der Aktivkohlefilter geheizt wird, (iii) Ansteuern des Vakuumerzeugers, sodass der Regenerierdruck an den Aktivkohlefilter angelegt wird, (iv) danach Ansteuern der Heizvorrichtung, sodass der Aktivkohlefilter nicht mehr geheizt wird, und der Umschaltvorrichtung, sodass der Vakuumerzeuger nicht mehr mit dem Aktivkohlefilter verbunden ist.

Die Umschaltvorrichtung kann ein oder mehrere Ventile aufweisen.

Vorteilhaft an der erfindungsgemäßen Lösung ist, dass in der Regel die Wiederverwertungsrate gesteigert werden kann. Da im Stand der Technik vor dem Aktivkohlefilter ein Kondensator angeordnet ist, war erwartet worden, dass die Menge an adsorbiertem Lösungsmittel des Elektrolyten klein ist. Es hat sich jedoch gezeigt, dass ein beträchtlicher Anteil des Lösungsmittels des Elektrolyten im Aktivkohlefilter gbunden wird. Zudem hat sich herausgestellt, dass entgegen der Erwartung unerwünschte Reaktionsprodukte, wie beispielsweise fluororganische Verbindungen oder Fluorwasserstoff, bei geeigneter Prozessführung in so weitem Umfang vermieden werden können, dass das im Aktivkohlefilter adsorbierte Lösungsmittel hinreichend wenig verunreinigt ist, um es sinnvoll wiederzuverwenden. Durch das Desorbieren des adsorbierten Elektrolyten wird das von der Aktivkohle des Aktivkohlefilters gebundene Lösungsmittel freigesetzt und kondensiert. So kann auch dieses Lösungsmittel wiederverwendet werden. Es hat sich herausgestellt, dass auf diese Weise im Gasstrom hinter dem Kondensator Lösemittel wiedergewonnen werden kann. Zwar wäre beispielsweise eine Cryokondensation möglich, das aber bedeutet einen deutlich erhöhten Aufwand.

Vorteilhaft ist zudem, dass die CO2-Bilanz verbessert werden kann. Batterie-Verarbeitunganlagen sind insbesondere notwendig geworden durch das vermehrte Aufkommen von Antriebsbatterien, also solchen Batterien, die in Elektrofahrzeugen zum Speichern von elektrischer Energie zum Antreiben von Fahrmotoren verwendet werden. Derartige Batterien zeichnen sich durch eine hohe Kapazität aus. Um aber beim Einsatz von Elektrofahrzeugen tatsächlich hohe CO2-Werte gegenüber der Verwendung von Verbrennungsmotoren einzusparen, ist es sinnvoll, Batterie-Verarbeitungsanlagen so zu betreiben, dass nicht deren CO2-Fußabdruck die erhofften CO2-Minderungen konterkariert.

Bei bisherigen Verfahren wurde die Aktivkohle des Aktivkohlefilters in regelmäßigen Abständen ausgetauscht. Durch den möglichen Gehalt an Fluorverbindungen war es notwendig, die Aktivkohle entweder zu verbrennen und die entstehenden Rauchgase aufwendig zu reinigen oder stofflich, beispielsweise bei der Stahlherstellung zum Aufkohlen zu verwenden. Durch das Desorbieren des Lösungsmittels kann die Aktivkohle des Aktivkohlefilters mehrfach verwendet werden, sodass die CO2-aufwändige Herstellung und Entsorgung der Aktivkohle stark vermindert werden kann.

Im Rahmen der vorliegenden Beschreibung wird unter einer flüssigelektrolythaltiger Batterie insbesondere eine Batterie verstanden, die einen Elektrolyten aufweist, der in einem Lösungsmittel gelöst ist. Es ist möglich, nicht aber notwendig, dass der gesamte Elektrolyt in einem Lösungsmittel gelöst ist. Insbesondere kann die Batterie zusätzlich einen Feststoffelektrolyten aufweisen. Vorzugsweise handelt es sich bei den Batterien zumindest auch um Alkalimetall-Batterien, insbesondere Lithium-Batterien oder Natrium-Batterien.

Unter dem Merkmal, dass der Aktivkohlefilter in Gasflussrichtung hinter der Trockenvorrichtung angeordnet ist, wird insbesondere verstanden, dass der Aktivkohlefilter so angeordnet ist, dass Lösungsmittel des Elektrolyten, das im Trocknungsbehälter verdampft, durch den Aktivkohlefilter tritt.

Die zerkleinerten Batterien können auch als Zerkleinerungsmaterial bezeichnet werden.

Die im Folgenden beschriebenen Schritte werden vorzugsweise automatisch durchgeführt.

Vorzugsweise besitzt die Batterie-Verarbeitungsanlage einen Vakuumerzeuger zum Erzeugen eines Unterdrucks im Trocknungsbehälter. Der Vakuumerzeuger ist vorzugsweise in Gasflussrichtung hinter dem Aktivkohlefilter angeordnet. Es ist aber auch möglich, dass der Vakuumerzeuger in Gasflussrichtung vor dem Aktivkohlefilter angeordnet ist.

Günstig ist es, wenn die Batterie-Verarbeitungsanlage eine Rückführleitung aufweist, mittels der Gas von einer Stelle in Gasflussrichtung hinter dem Vakuumerzeuger an eine Stelle vor dem Kondensator leitbar ist. Es ist möglich, dass die Batterie-Verarbeitungsanlage in eine Schaltstellung bringbar ist, in der Gas vom Vakuumerzeuger zum Trocknungsbehälter oder zu einer Vakuumleitung, mittels der der Trocknungsdruck an den Trocknungsbehälter angelegt wird, zurückgeleitet wird.

Günstig ist es, wenn der Kondensator mit einem Kondensatbehälter verbunden ist. Um eine möglichst hohe Abscheiderate von Lösungsmittel des Elektrolyten zu erreichen, umfasst der Kondensator vorzugsweise einen Zyklon-Kondensatabscheider.

Gemäß einer bevorzugten Ausführungsform umfasst die Batterie-Verarbeitungsanlage einen Vakuumerzeuger, der mit einem Saug-Eingang mit dem Aktivkohlefilter zum Anlegen eines Regenerierdrucks verbindbar angeordnet ist. Vorzugsweise beträgt der Regenerierdruck höchstens 50 hPa, insbesondere höchstens 10 hPa. Günstig ist es, wenn zu zumindest zu einem Zeitpunkt ein Druck von höchstens 5 hPa am Aktivkohlefilter anliegt.

Günstig ist es, wenn der Vakuumerzeuger so ausgebildet und angeordnet ist, dass er mit dem Trocknungsbehälter über eine Vakuumleitung verbunden ist und in Fluidverbindung mit dem Trocknungsbehälter bringbar ist. Vorzugsweise ist die Fluidverbindung mit dem Trocknungsbehälter trennbar, insbesondere mittels eines Ventils.

Vorzugsweise besitzt die Batterie-Verarbeitungsanlage einen zweiten Kondensator. Vorzugsweise ist der Vakuumerzeuger in Gasflussrichtung zwischen dem ersten Kondensator und dem zweiten Kondensator angeordnet. Auf diese Weise kann besonders viel Lösungsmittel zurückgewonnen werden.

Vorzugsweise ist der Aktivkohlefilter in Gasflussrichtung zwischen einem Kondensator und dem Vakuumerzeuger angeordnet.

Gemäß einer bevorzugten Ausführungsform weist die Heizvorrichtung zumindest ein Heizrohr auf, das durch Aktivkohle des Aktivkohlefilters verläuft. Das Heizrohr ist vorzugsweise von einem Heizfluid, insbesondere einer Heizflüssigkeit, beispielsweise Wasser, zum Heizen durchströmt. Das Heizfluid wird vorzugsweise zumindest teilweise mit Abwärme, beispielsweise vom Vakuumerzeuger, erhitzt.

Günstig ist es, wenn die Batterie-Verarbeitungsanlage eine Steuereinrichtung aufweist, die ausgebildet ist zum automatischen Ansteuern der Heizvorrichtung, sodass die Aktivkohle des Aktivkohlefilters auf eine Regenerationstemperatur erwärmt wird. Vorzugsweise beträgt die Regenerationstemperatur zumindest 50°C, insbesondere zumindest 60°C, vorzugsweise zumindest 70°C.

Vorzugsweise beträgt die Regenerationstemperatur höchstens 110°C. Das gilt insbesondere dann, wenn im Aktivkohlefilter Fluorbenzol adsorbiert ist. Die genannten Temperaturangaben gelten insbesondere für den Fall, dass beim Heizen des Aktivkohlefilters entstehender Desorbatdampf kondensiert wird.

Es ist möglich und stellt eine bevorzugte Ausführungsform dar, dass die Steuereinrichtung ausgebildet ist zum automatischen Ansteuern der Heizvorrichtung, sodass die Aktivkohle nach dem Erwärmen auf die Regenerationstemperatur auf eine Reinigungstemperatur von zumindest 110°C erhitzt wird. In diesem Fall ist es günstig, wenn die dabei entstehenden Dämpfe entweder ebenfalls kondensiert, nicht aber wiederverwendet werden, oder aber thermisch, insbesondere oxidativ, zersetzt werden. Es hat sich herausgestellt, dass bei Temperaturen oberhalb der Regenerationstemperatur etwaige vorhandene Fluorverbindungen verstärkt desorbiert werden, die das kondensierte Lösungsmittel so stark verunreinigen, dass es nicht sinnvoll wiederverwertet werden kann.

Vorzugsweise besitzt die Batterie-Verarbeitungsanlage einen zweiten Aktivkohlefilter, der zum ersten Aktivkohlefilter parallel schaltbar angeordnet ist. Hierunter wird insbesondere verstanden, dass die beiden Aktivkohlefilter so angeordnet und verschaltet sind, dass vom Trocknungsbehälter kommendes Gas entweder nur durch den ersten Aktivkohlefilter oder nur durch den zweiten Aktivkohlefilter strömt.

Vorzugsweise besitzt die Batterie-Verarbeitungsanlage eine Umschaltvorrichtung, die in (i) eine erste Schaltstellung, in der der erste Aktivkohlefilter mit einer Saug-Seite des Vakuumerzeugers zum Anlegen des Regenerierdrucks und der zweite Aktivkohlefilter nicht mit der Saug-Seite des Vakuumerzeugers verbunden ist, und (ii) eine zweite Schaltstellung, in der der zweite Aktivkohlefilter mit der Saug-Seite des Vakuumerzeugers zum Anlegen des Regenerierdrucks und der erste Aktivkohlefilter nicht mit dem Vakuumerzeuger verbunden ist, bringbar ist.

Günstig ist es in diesem Fall, wenn in der ersten Schaltstellung der zweite Aktivkohlefilter mit einer Auslass-Seite des Vakuumerzeugers verbunden ist. Es ist dann günstig, wenn in Gasflussrichtung hinter der Auslass-Seite des Vakuumerzeugers der Kondensator angeordnet ist. In diesem Fall kann der Vakuumerzeuger den Regenerierdruck an den ersten Aktivkohlefilter anlegen, sodass adsorbiertes Lösungsmittel desorbiert wird. Das desorbierte Lösungsmittel wird als Desorbatdampf im Kondensator kondensiert.

Vorzugsweise liegt an der Auslass-Seite des Vakuumerzeugers ein Druck an, der größer ist als der Umgebungsdruck.

Vorzugsweise ist der Kondensator in Gasflussrichtung zwischen der Auslass-Seite des Vakuumerzeugers und dem zweiten Aktivkohlefilter angeordnet. Das Lösungsmittel, das vom Kondensator nicht auskondensiert wurde, wird dann zum weit überwiegenden Fall vom zweiten Aktivkohlefilter adsorbiert. Anschließend kann das verbleibende Gas in die Umgebung abgegeben werden.

Alternativ oder zusätzlich ist es günstig, wenn in der zweiten Schaltstellung der erste Aktivkohlefilter mit der Auslass-Seite des Vakuumerzeugers verbunden ist.

Es ist dann günstig, wenn in Gasflussrichtung hinter der Auslass-Seite des Vakuumerzeugers der Kondensator angeordnet ist. Vorzugsweise ist der Kondensator dann in Gasflussrichtung zwischen der Auslass-Seite des Vakuumerzeugers und dem ersten Aktivkohlefilter angeordnet. Auf diese Weise können die Aktivkohlefilter regeneriert und das desorbierte Lösungsmittel zurückgewonnen werden.

In anderen Worten ist vorzugsweise in der ersten Schaltstellung der zweite Kondensator in Gasflussrichtung hinter dem Vakuumerzeuger und vor dem zweiten Aktivkohlefilter geschaltet und/oder in der zweiten Schaltstellung der zweite Kondensator in Gasflussrichtung hinter den Vakuumerzeuger und vor dem ersten Aktivkohlefilter geschaltet.

Vorzugsweise wird der Kondensator so betrieben, dass das Gas, das den Kondensator verlässt, eine Temperatur von höchstens 10°C, insbesondere höchstens 0°C, hat. Dieses Gas strömt vorzugsweise danach durch zumindest einen Aktivkohlefilter und kühlt die Aktivkohle dieses Aktivkohlefilters. Dadurch verbessert sich die Adsorption.

Vorzugsweise ist die Steuereinheit ausgebildet zum automatischen (i) Schalten der Umschaltvorrichtung in die erste Schaltstellung und (ii) Ansteuern des Vakuumerzeugers, sodass der Regenerierdruck an den ersten Aktivkohlefilter angelegt wird, (iii) danach Schalten der Umschaltvorrichtung in die zweite Schaltstellung und (iv) Ansteuern des Vakuumerzeugers, sodass der Regenerierdruck an den zweiten Aktivkohlefilter angelegt wird.

Vorzugsweise weist die Heizvorrichtung zumindest ein zweites Heizrohr auf, das durch zweite Aktivkohle des zweiten Aktivkohlefilters verläuft.

Günstig ist es, wenn die Batterie-Verarbeitungsanlage eine Trockengasquelle zum Abgeben von trockenem Inertgas, insbesondere Stickstoff, in Gasflussrichtung vor dem Aktivkohlefilter aufweist. Günstig ist es, wenn die Trockengasquelle angeordnet ist zum Abgeben des Inertgases hinter dem Vakuumerzeuger, insbesondere hinter dem zweiten Kondensator. Das trockene Inertgas erleichtert das Desorbieren des adsorbierten Lösungsmittels, insbesondere durch Verbessern des Wärmeeintrags in die Aktivkohle.

Günstig ist es, wenn der Vakuumerzeuger eine Vor-Vakuumpumpe zum Erzeugen eines Vordrucks und eine Regenerierdruck-Vakuumpumpe zum Erzeugen eines Regenerierdrucks, der kleiner ist als der Vordruck, umfasst. Die Vor-Vakuumpumpe ist insbesondere als Vorpumpe zur Regenerierdruck-Vakuumpumpe geschaltet.

Ein Regenerierdruckpumpen-Sauganschluss der Regenerierdruck-Vakuumpumpe ist mittels einer Saugleitung mit dem Aktivkohlefilter verbunden, sodass der Regenerierdruck an den Aktivkohlefilter angelegt werden kann.

Vorzugsweise ist der Vakuumerzeuger mit dem Trocknungsbehälter zum Anlegen eines Trocknungsdrucks verbunden. Vorzugsweise beträgt der Trocknungsdruck höchstens 300 hPa, insbesondere höchstens 100 hPa, vorzugsweise höchstens 50 hPa. Dazu ist vorzugsweise der Vorvakuumpumpen-Sauganschluss der Vor-Vakuumpumpe mit dem Trocknungsbehälter mit der Vakuumleitung verbunden.

Zum Unterbrechen einer Verbindung zwischen Vakuumerzeuger und Trocknungsbehälter besitzt die Umschaltvorrichtung vorzugsweise ein Sperrventil.

Die Batterie-Verarbeitungsanlage weist vorzugsweise eine Inertgas-Spülvorrichtung zum Spülen der Zerkleinerungsvorrichtung mit einem Inertgas auf. Günstig ist es, wenn die Inertgas-Spülvorrichtung keine Vorrichtung zum chemischen Binden von Fluorwasserstoff, insbesondere keine Gaswaschvorrichtung, besitzt.

Ein erfindungsgemäßes Verfahren umfasst vorzugsweise den Schritt des Ansteuerns des Sperrventils, sodass der Aktivkohlefilter und/oder der Vakuumerzeuger vom Trocknungsbehälter getrennt wird.

Vorzugsweise umfasst das erfindungsgemäße Verfahren den Schritt des Entladens der Batterien, bis eine Batteriespannung, die an den Polen der Batterie anliegt, unter eine Entladespannung gesunken ist. Vorzugsweise beträgt die Entladespannung Uₑ = 0,3 V, insbesondere 0,25 V, bevorzugt 0,2 V, besonders bevorzugt 0,15 V, insbesondere besonders bevorzugt 0,1 V. Die Entladespannung kann sogar 0 V betragen.

Vorzugsweise umfasst das erfindungsgemäße Verfahren den Schritt des Kurzschließens der entladenen Batterien für eine Kurzschlusszeit. Beispielsweise beträgt die Kurzschlusszeit zumindest 5 Stunden, insbesondere zumindest 10 Stunden besonders bevorzugt zumindest 15 Stunden. Insbesondere ist die Kurzschlusszeit kürzer als 100 Stunden.

Die Kurzschlusszeit ist vorzugsweise so gewählt, dass nach dem Beenden des Kurzschlusses eine Erholungsspannung unterschritten wird. Die Erholungsspannung ist diejenige Spannung, die nach einer Erholungszeit an den Polen der Batterie anliegt, wenn während der Erholungszeit an den Polen der Batterie kein Strom abgegriffen wird. Die Erholungszeit beträgt beispielsweise 12 Stunden. Nach einem Entladen steigt die Batteriespannung zwischen den Polen wieder an, nämlich auf die Erholungsspannung. Der Grund dafür sind Diffusionsprozesse in der Batterie. Durch das Kurzschließen der entladenen Batterien reagieren die in der Batterie enthaltenen elektrochemisch aktiven Substanzen quasi vollständig zu ihren Endprodukten. Vorzugsweise beträgt die Erholungsspannung 0,3 V, insbesondere 0,25 V, bevorzugt 0,2 V, besonders bevorzugt 0,15 V, insbesondere besonders bevorzugt 0,1 V.

Es sei darauf hingewiesen, dass die Erholungsspannung auch dann definiert ist, wenn die kurzgeschlossene Batterie vor Ende der Erholungszeit zerkleinert wird, denn es handelt sich um diejenige Spannung, die Anliegen würde, wenn die Batterie über die Erholungszeit ohne abgegriffene Spannung bliebe.

Es hat sich herausgestellt, dass im Aktivkohlefilter besonders wenige unerwünschte Substanzen, insbesondere fluorhaltige Substanzen, enthalten sind, wenn die Batterien kurzgeschlossen werden.

Im Folgenden wird die Erfindung anhand der beigefügten Zeichnungen näher erläutert. Dabei zeigt
- Figur 1: ein Schema einer erfindungsgemäßen Batterie-Verarbeitungsanlage zum Durchführen eines Erfindung gemessen Verfahrens und
- Figur 2: ein Schema einer erfindungsgemäßen Batterie-Verarbeitungsanlage gemäß einer zweiten Ausführungsform zum Durchführen eines Erfindung gemessen Verfahrens.

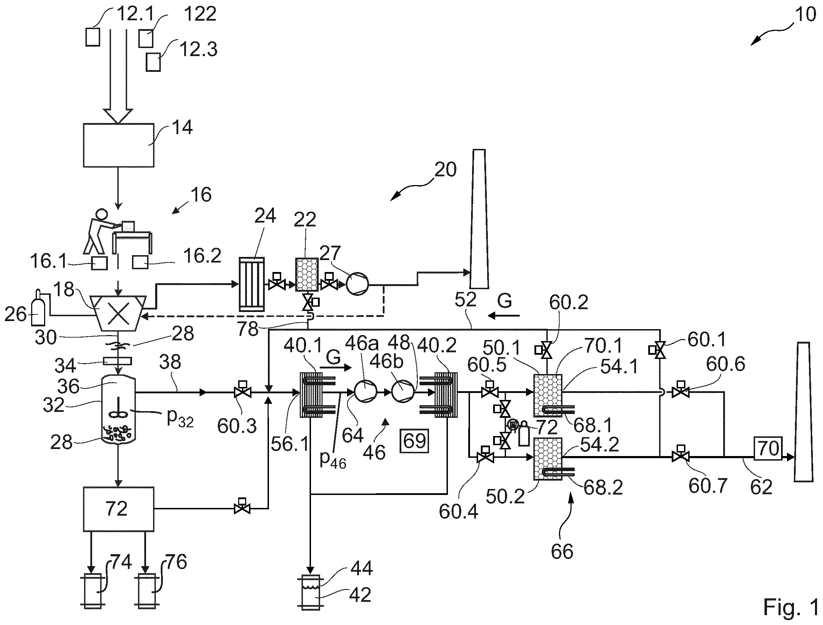

Figur 1 zeigt eine erfindungsgemäße Batterie-Verarbeitungsanlage 10 zum Behandeln von Batterien 12.n (n=1, 2,... N). Die Batterien sind zunächst in der Regel Bestandteile von Batteriemodulen und werden zunächst in einer Entladestation 14 entladen, bis eine Entladungsspannung Uₑ unterhalb einer Soll-Entladespannung U_{e,soll} liegt. Beispielsweise gilt U_{e,soll} = 0,3 V.

Die entladenen Batterien werden danach vorzugsweise für eine Kurzschlusszeit t_{K} so lange kurzgeschlossen, dass eine Erholungsspannung Uᵣ auch nach einer Erholungszeit tᵣ von beispielsweise tᵣ = 12 h unterhalb von Uᵣ = 0,3 V, insbesondere unterhalb von 0,2 V liegt. Die so lange kurzgeschlossen Batterien werden als inaktivierte Batterien bezeichnet.

Die inaktivierten Batterien der Batteriemodule werden in einer Demontagestation 16 demontiert, sodass die Batterien 12.n vereinzelt vorliegen. Beispielsweise werden dazu die Batteriemodule aus einem Rahmen entnommen und/oder die Batterien 12.n aus ihren Batteriemodulen gelöst. Die Demontage ist optional.

Nachfolgend werden die Batterien 12.n in einer Zerkleinerungsvorrichtung 18 zerkleinert. Die Zerkleinerungsvorrichtung 18 ist mit einer Inertgas-Spülvorrichtung 20 verbunden, mittels der die Zerkleinerungsvorrichtung 18 mit einem Inertgas, beispielsweise Stickstoff, gespült wird. Die Inertgas-Spülvorrichtung 20 kann einen Filter 22, der beispielsweise Aktivkohle enthält, und/oder einen Kondensator 24 aufweisen. Es sei darauf hingewiesen, dass die Inertgas-Spülvorrichtung 20 eine Vorrichtung zum chemischen Binden von Fluorwasserstoff aufweisen kann, dies ist aber nicht notwendig. Vorzugsweise besitzt die Inertgas-Spülvorrichtung 20 daher keine Vorrichtung zum chemischen Binden von Fluorwasserstoff, insbesondere keine Gaswaschvorrichtung. Das Inertgas kann mittels einer Inertgasquelle 26 zugeführt werden.

Es ist möglich, nicht aber notwendig, dass die Zerkleinerungsvorrichtung 18 eine Saugpumpe 27 aufweist, aufweist. Gereinigtes Inertgas wird in die Umgebung abgeführt. Alternativ kann Inertgas zumindest teilweise in die Zerkleinerungsvorrichtung 18 zurückgeführt werden, wie durch die gestrichelte Linie angedeutet ist.

Die Zerkleinerungsvorrichtung 18 erzeugt Zerkleinerungsmaterial 28 in Form der zerkleinerten Batterien. Die Zerkleinerungsvorrichtung 18 ist mittels einer gasdichten Leitung 30 mit einem Trocknungsbehälter 32 verbunden. Die Zerkleinerungsvorrichtung 18 ist vom Trocknungsbehälter 32 mittels einer Schleuse 34 verbunden.

Im Trocknungsbehälter 32 herrscht ein Trocknungsdruck p₃₂. Beispielsweise gilt p₃₂ ≤ 300 hPa. Für eine Trocknungstemperatur T₃₂ im Trocknungsbehälter gilt vorzugsweise T₃₂ ≤ 50°C. Durch den Unterdruck verdampft Lösungsmittel des Elektrolyten der Batterien 12.n, sodass Lösungsmitteldampf 36 entsteht, der in einer Vakuumleitung 38 abgeführt wird.

Der Lösungsmitteldampf 36 gelangt in einen ersten Kondensator 40.1 und wird dort zumindest teilweise kondensiert. Entstehendes Kondensat 42 wird in einem Kondensatbehälter 44 aufgefangen. In Gasflussrichtung G hinter dem ersten Kondensator 40.1 ist ein Vakuumerzeuger 46 angeordnet. Dessen Auslass-Seite 48 ist mit einem optionalen zweiten Kondensator 40.2 verbunden. Es ist möglich, dass nur der erste Kondensator 40.1, nur der zweite Kondensator 40.2 oder beide Kondensatoren 40.1, 40.2 vorhanden sind.

Die Batterie-Verarbeitungsanlage 10 umfasst einen ersten Aktivkohlefilter 50.1 und einen optionalen zweiten Aktivkohlefilter 50.2. Der erste Aktivkohlefilter 50.1 und gegebenenfalls der zweite Aktivkohlefilter 50.2 sind bei der Batterie-Verarbeitungsanlage 10 in Gasflussrichtung G hinter dem Vakuumerzeuger 46 angeordnet. Der Trocknungsbetrieb ist der Betriebszustand, in der am Trocknungsbehälter 32 der Trocknungsdruck p₃₂ anliegt.

Die Batterie-Verarbeitungsanlage 10 weist eine Rückführleitung 52 auf, mittels der eine erste Abgas-Seite 54.1 des ersten Aktivkohlefilters 50.1 und/oder eine zweite Abgas-Seite 54.2 des zweiten Aktivkohlefilters 50.2 mit einer Eingangs-Seite 56.1 des Kondensators 40.1 in Fluidverbindung bringbar ist.

Die Batterie-Verarbeitungsanlage 10 besitzt eine Umschaltvorrichtung 58, die ein Ventil oder mehrere Ventile aufweisen kann. In der vorliegenden Ausführungsform umfasst die Umschaltvorrichtung 58 ein erstes Ventil 60.1, ein zweites Ventil 60.2, ein drittes Ventil 60.3, das als Sperrventil bezeichnet wird, ein viertes Ventil 60.4 oder ein fünftes Ventil 60.5.

In einer Trocknungsstellung der Umschaltvorrichtung 58 ist die Batterie-Verarbeitungsanlage 10 im Trocknungsbetrieb. Im Trocknungsbetrieb sind die Ventile 60.1 und 60.2 geschlossen, dass Ventil 60.3 geöffnet und eines der Ventile 60.4 oder 60.5 geöffnet. Der vom Vakuumerzeuger 46 erzeugte Unterdruck p₄₆ liegt daher fast vollständig am Trocknungsbehälter 32 an. Der Lösungsmitteldampf 36 strömt daher durch den ersten Kondensator 40.1, der verbleibende Lösungsmitteldampf durch den Vakuumerzeuger 46, danach durch den zweiten Kondensator 40.2 und danach je nach Stellung der Ventile 60.4, 60.5 durch den ersten Aktivkohlefilter 50.1 oder den zweiten Aktivkohlefilter 50.2. Danach gelangt das etwaig vorhandene Restgas 62 in die Umwelt.

Die Umschaltvorrichtung 58 ist zudem in eine erste Schaltstellung bringbar, in der der erste Aktivkohlefilter 50.1 mit einer Saug-Seite 64 des Vakuumerzeugers 46 verbunden ist. Dazu wird das Ventil 60.1 geöffnet und das Ventil 60.5 und ein Ventil 60.6 an der Abgas-Seite 54 des ersten Aktivkohlefilters 50.1 geschlossen. Günstig, nicht aber notwendig, ist es, wenn auch das Ventil 60.3 geschlossen wird. Der Unterdruck p₄₆ des Vakuumerzeugers liegt dann als ein Regenerierdruck pᵣ am ersten Aktivkohlefilter 50.1 an.

Mittels einer Heizvorrichtung 66, die ein erstes Heizrohr 68.1 aufweist, wird zudem Aktivkohle 70.1 im ersten Aktivkohlefilter 50.1 auf eine Regenerationstemperatur Tᵣ erwärmt. Beispielsweise gilt 50°C ≤ Tᵣ ≤ 100°C. Dadurch desorbiert Lösungsmittel, das im ersten Aktivkohlefilter 50.1 adsorbiert ist, sodass Desorbatdampf entsteht, der durch die Rückführleitung 52 in den ersten Kondensator 40.1 gelangt, teilweise durch den Vakuumerzeuger 46 tritt, den zweiten Kondensator 40.2 passiert und durch das geöffnete Ventil 60.4 durch den zweiten Aktivkohlefilter 50.2 und durch ein siebtes Ventil 60.7 in die Umgebung strömt. Das Ventil 60.1 ist geschlossen. In der ersten Schaltstellung ist damit der zweite Aktivkohlefilter 50.2 mit der Auslass-Seite 48 des Vakuumerzeugers 46 verbunden.

Durch das zunehmende Desorbieren des Lösungsmittels im ersten Aktivkohlefilter 50.1 sinkt ein Druck p_{50.1} im Aktivkohlefilter 50.1 beständig ab. Ist ein vorgegebener Enddruck p_{E} erreicht, beispielsweise p_{E} = 1 hPa oder eine vorgegebene Regenerationszeit t_{R} , beispielsweise t_{R} = 1 h überschritten, wird die Heizvorrichtung 66 deaktiviert und das Ventil 60.2 geschlossen. Der Aktivkohlefilter 50.1 kann erneut zum Reinigen von Gas vor dem Abgeben in die Umgebung verwendet werden.

Zum Entfernen von adsorbiertem Lösungsmittel vom zweiten Aktivkohlefilter 50.2 wird die Umschaltvorrichtung 58 in eine zweite Schaltstellung gebracht, in der die Ventile 60.7, 60.4, 60.2 geschlossen sind und das Ventil 60.1 geöffnet ist. Zudem wird mittels eines zweiten Heizrohrs 68.2 der Heizvorrichtung 66 die Aktivkohle des zweiten Aktivkohlefilters 50.2 erwärmt. Der entstehende Desorbatdampf gelangt durch die Rückführleitung 52 in den ersten Kondensator 40.1, passiert den Vakuumerzeuger 46, tritt durch den zweiten Kondensator 40.2 und strömt durch den ersten Aktivkohlefilter 50.1 gereinigt in die Umgebung.

Die Batterie-Verarbeitungsanlage 10 besitzt eine Steuereinrichtung 69, die mit dem Vakuumerzeuger 46, den Ventilen 60.m (m = 1, 2, ... M mit M der Anzahl an Ventilen) und der Heizvorrichtung 66 zum Ansteuern verbunden ist.

Es ist möglich, nicht aber notwendig, dass der Vakuumerzeuger 46 eine Vor-Vakuumpumpe 46a und eine Regenerierdruck-Vakuumpumpe 46b aufweist. Die Vor-Vakuumpumpe 46a ist als Vorpumpe zur Regenerierdruck-Vakuumpumpe 46b geschaltet.

Es ist möglich, nicht aber notwendig, dass das Restgas 62 vor dem Abgeben in die Umgebung in einer Abgasbehandlungsanlage 70 thermisch und/oder katalytisch oxidiert wird.

Um das Erwärmen der Aktivkohle zu verbessern, kann mittels einer Trockengasquelle 72 trockenes, insbesondere erwärmtes, Inertgas so abgegeben werden, dass es in zumindest einen Aktivkohlefilter 50.1, 50.2 gelangt.

In einer Trennanlage 72 wird vom getrockneten Zerkleinerungsgut 28 die Schwarzmasse 74 von Folienteilen 76 abgetrennt und jeweils gesondert entweder weiterbehandelt oder in ein Transportbehältnis abgefüllt.

Mittels einer Stichleitung 78 kann ein Vakuum an den Filter 22 angelegt werden, um adsorbiertes Lösungsmittel zu entfernen.

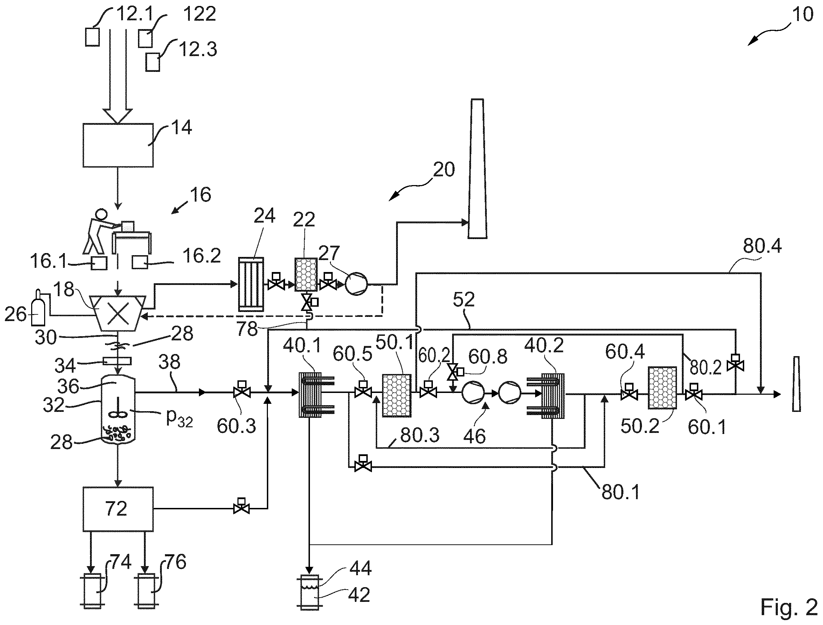

Figur 2 zeigt eine alternative Ausführungsform einer erfindungsgemäßen Batterie-Verarbeitungsanlage 10. Im Trocknungsbetrieb durchströmt Lösungsmitteldampf, also Desorbatdampf, zunächst den Kondensator 40.1, dann den ersten Aktivkohlefilter 50.1 und danach den Vakuumerzeuger 46. In Gasflussrichtung hinter dem Vakuumerzeuger 46 befinden sich der zweite Kondensator 40.2 und der zweite Aktivkohlefilter 50.2.

Mittels einer ersten Umschaltleitung 80.1 und einer zweiten Umschaltleitung 80.2 kann der zweite Aktivkohlefilter in Gasflussrichtung vor den Vakuumerzeuger 46 geschaltet werden.

Durch Schließen der Ventile 60.5, 60.8 und öffnen der Ventile 60.1, 60.2, 60.4 kann der Regenerierdruck an den ersten Aktivkohlefilter 50.1 eingelegt werden.

Durch Schließen der Ventile 60.1, 60.2, 60.4 und Öffnen des Ventils 60.8 kann der zweite Aktivkohlefilter 50.2 mit Regenerierdruck beaufschlagt werden. Das der Lösungsmitteldampf, der den Kondensator 40.2 passiert, gelangt über eine dritte Umschaltleitung 80.3 in den ersten Aktivkohlefilter 50.1 und von dort über die vierte Umschaltleitung 80.4 in die Umgebung.

**Bezugszeichenliste**

| | | | |
|---|---|---|---|
| 10 | Batterie-Verarbeitungsanlage | 62 | Restgas |
| 12 | Batterie | 64 | Saug-Seite |
| 14 | Entladestation | 66 | Heizvorrichtung |
| 16 | Demontagestation | 68 | Heizrohr |
| 18 | Zerkleinerungsvorrichtung | | |
| | | 70 | Abgasbehandlungsanlage |
| 20 | Inertgas-Spülvorrichtung | 72 | Trennanlage |
| 22 | Filter | 74 | Schwarzmasse |
| 24 | Kondensator | 76 | Folienteile |
| 26 | Inertgasquelle | 78 | Stichleitung |
| 28 | Zerkleinerungsmaterial | | |
| | | 80 | Umschaltleitung |
| 30 | Leitung | | |
| 32 | Trocknungsbehälter | G | Gasflussrichtung |
| 34 | Schleuse | n | Laufindex |
| 36 | Lösungsmitteldampf | N | Zahl der Batterien |
| 38 | Vakuumleitung | M | Zahl der Ventile |
| | | p | Druck |
| 40 | Kondensator | p₃₂ | Trocknungsdruck |
| 42 | Kondensat | p₄₆ | Unterdruck des Vakuumerzeu-gers |
| 44 | Kondensatbehälter | | |
| 46 | Vakuumerzeuger | p_{E} | Enddruck |
| 48 | Auslass-Seite | pᵣ | Trocknungsdruck |
| | | tᵣ | Erholungszeit |
| 50 | Aktivkohlefilter | t_{K} | Kurzschlusszeit |
| 52 | Rückführleitung | t_{R} | Regenerationszeit |
| 54 | Abgas-Seite | T₃₂ | Trocknungstemperatur |
| 56 | Eingangs-Seite | Tᵣ | Regenerationstemperatur |
| 58 | Umschaltvorrichtung | Uₑ | Entladungsspannung |
| | | U_{e,soll} | Soll-Entladespannung |
| 60 | Ventil | Uᵣ | Erholungsspannung |

## Patentansprüche

1. Batterie-Verarbeitungsanlage (10) zum Behandeln flüssigelektrolythaltiger Batterien (12.n), mit
(a) einer Zerkleinerungsvorrichtung (18) zum Zerkleinern der Batterien (12.n),
(b) einem Trocknungsbehälter (32) zum Trocknen von zerkleinerten Batterien (12.n), sodass Lösungsmittel des Elektrolyten verdampft und Lösungsmitteldampf (36) entsteht, und
(c) einem Aktivkohlefilter (50), der in Gasflussrichtung (G) hinter der Trocknungsvorrichtung angeordnet ist,
**gekennzeichnet durch**
(d) eine Heizvorrichtung (66) zum Heizen des Aktivkohlefilters (50.1), sodass im Aktivkohlefilter (50.1) adsorbierter Lösungsmittel desorbierbar, sodass Desorbatdampf entsteht ist, und
(e) einen Kondensator (40.1) zum Kondensieren von Desorbatdampf angeordnet ist.

2. Batterie-Verarbeitungsanlage (10) nach Anspruch 1, **gekennzeichnet durch** einen Vakuumerzeuger (46), der mit einem Saug-Eingang mit dem Aktivkohlefilter (50.1) zum Anlegen eines Regenerierdrucks von höchstens 50 hPa, insbesondere höchstens 10 hPa, verbindbar angeordnet ist.

3. Batterie-Verarbeitungsanlage (10) nach Anspruch 2, **gekennzeichnet durch**
(a) einen zweiten Kondensator (40.2),
(b) wobei der Vakuumerzeuger (46) in Gasflussrichtung (G) zwischen dem ersten Kondensator (40.1) und dem zweiten Kondensator (40.2) angeordnet ist.

4. Batterie-Verarbeitungsanlage (10) nach einem der vorstehenden Ansprüche, **dadurch gekennzeichnet, dass**
(a) die Heizvorrichtung (66) zumindest ein Heizrohr (68.1) aufweist, das durch Aktivkohle des Aktivkohlefilters (50.1) verläuft
(b) eine Steuereinrichtung (69) der Batterie-Verarbeitungsanlage (10) ausgebildet ist zum automatischen Ansteuern der Heizvorrichtung (66), sodass der Aktivkohlefilter (50) auf zumindest 50°C und/oder höchstens 110°C erwärmt wird.

5. Batterie-Verarbeitungsanlage (10) nach einem der vorstehenden Ansprüche, **gekennzeichnet durch**
(a) zumindest einen zweiten Aktivkohlefilter (50.2), der zum ersten Aktivkohlefilter (50.1) parallel schaltbar angeordnet ist und
(b) eine Umschaltvorrichtung (58), die in
(i) eine erste Schaltstellung, in der der erste Aktivkohlefilter (50.1) mit einer Saug-Seite (64) des Vakuumerzeugers (46) und
der zweite Aktivkohlefilter (50.2) nicht mit der Saug-Seite (64) des Vakuumerzeugers (46) verbunden ist, und
(ii) eine zweite Schaltstellung, in der der zweite Aktivkohlefilter (50.2) mit der Saug-Seite (64) des Vakuumerzeugers (46) und
der erste Aktivkohlefilter (50.1) nicht mit der Saug-Seite (64) des Vakuumerzeugers (46) verbunden ist, bringbar ist,
(iii) wobei in der ersten Schaltstellung der zweite Aktivkohlefilter (50.2) mit einer Auslass-Seite (48) des Vakuumerzeugers (46) verbunden ist und
(iv) wobei in der zweiten Schaltstellung der erste Aktivkohlefilter (50.1) mit der Auslass-Seite (48) des Vakuumerzeugers (46) verbunden ist.

6. Batterie-Verarbeitungsanlage (10) nach einem der vorstehenden Ansprüche, **gekennzeichnet durch** eine Steuereinheit, die ausgebildet ist zum automatischen
(i) Schalten der Umschaltvorrichtung (58) in die erste Schaltstellung und
(ii) Ansteuern des Vakuumerzeugers (46), sodass der Regenerierdruck an den ersten Aktivkohlefilter (50.1) angelegt wird,
(iii) danach Schalten der Umschaltvorrichtung (58) in die zweite Schaltstellung und
(iv) Ansteuern des Vakuumerzeugers (46), sodass der Regenerierdruck an den zweiten Aktivkohlefilter (50.2) angelegt wird.

7. Batterie-Verarbeitungsanlage (10) nach einem der vorstehenden Ansprüche, **dadurch gekennzeichnet, dass**
(a) in der ersten Schaltstellung der zweite Kondensator (40.2) in Gasflussrichtung (G) hinter den Vakuumerzeuger (46) und vor den zweiten Aktivkohlefilter (50.2) geschaltet ist und
(b) in der zweiten Schaltstellung der zweite Kondensator (40.2) in Gasflussrichtung (G) hinter den Vakuumerzeuger (46) und vor den ersten Aktivkohlefilter (50.1) geschaltet ist.

8. Batterie-Verarbeitungsanlage (10) nach einem der vorstehenden Ansprüche, **dadurch gekennzeichnet, dass**
die Heizvorrichtung (66) zumindest ein zweites Heizrohr (68) aufweist, das durch zweite Aktivkohle des zweiten Aktivkohlefilters (50.2) verläuft.

9. Batterie-Verarbeitungsanlage (10) nach einem der vorstehenden Ansprüche, **gekennzeichnet durch**
eine Trockengasquelle zum Abgeben von trockenem Inertgas, insbesondere Stickstoff, in Gasflussrichtung (G) vor dem zumindest einen Aktivkohlefilter (50.1, 50.2),
wobei die Trockengasquelle angeordnet ist zum Abgeben des Inertgases hinter dem Vakuumerzeuger (46), insbesondere hinter dem zweiten Kondensator (40.2).

10. Batterie-Verarbeitungsanlage (10) nach einem der vorstehenden Ansprüche, **dadurch gekennzeichnet, dass**
(a) der Vakuumerzeuger (46)
- eine Vor-Vakuumpumpe zum Erzeugen eines Vordrucks und
- eine Regenerierdruck-Vakuumpumpe, zum Erzeugen eines Regenerierdrucks, der kleiner ist als der Vordruck, umfasst,
- wobei die Vor-Vakuumpumpe eine Vorpumpe der Regenerierdruck-Vakuumpumpe bildet,
(b) ein Regenerierdruckpumpen-Sauganschluss der Regenerierdruck-Vakuumpumpe mit dem Aktivkohlefilter (50) verbunden ist und
(c) ^{©}der Vorvakuumpumpen-Sauganschluss der Vor-Vakuumpumpe mit dem Trocknungsbehälter (32) verbunden ist.

11. Batterie-Verarbeitungsanlage (10) nach einem der vorstehenden Ansprüche, **gekennzeichnet durch**
ein Sperrventil (60.3) zum Unterbrechen einer Vakuumleitung (38), die den Vakuumerzeuger (46) mit dem Trocknungsbehälter (32) verbindet.

12. Verfahren zum Betreiben einer Batterie-Verarbeitungsanlage (10) nach einem der vorstehenden Ansprüche, **gekennzeichnet durch** die Schritte:
(i) Ansteuern der Umschaltvorrichtung (58), sodass der Vakuumerzeuger (46) mit dem Aktivkohlefilter (50.1) verbunden wird,
(ii) Ansteuern der Heizvorrichtung (66), sodass der der Aktivkohlefilter (50.1) geheizt wird,
(iii) Ansteuern des Vakuumerzeugers (46), sodass der Regenerierdruck an den Aktivkohlefilter (50.1) angelegt wird,
(iv) danach Ansteuern
der Heizvorrichtung (66), sodass der Aktivkohlefilter (50.1) nicht mehr geheizt wird, und
der Umschaltvorrichtung (58), sodass der Vakuumerzeuger (46) nicht mehr mit dem Aktivkohlefilter (50.1) verbunden ist.

13. Verfahren nach Anspruch 12, **gekennzeichnet durch** den Schritt Ansteuern eines Sperrventils (60.3), sodass der Aktivkohlefilter (50.1) und/oder der Vakuumerzeuger (46) vom Trocknungsbehälter (32) getrennt wird.

14. Verfahren nach einem der Ansprüche 12 oder 13, **gekennzeichnet durch** den Schritt:
(a) vor dem Zerkleinern Entladen der Batterien (12.n) auf eine Entladespannung (Uₑ) von höchstens 0,3 V, sodass entladene Batterien (12.n) entstehen und
(b) Kurzschließen der entladenen Batterien (12.n) für eine Kurzschlusszeit (tₖ)
(c) ^{©}wobei die Kurzschlusszeit (tₖ) so gewählt ist, dass eine Erholungsspannung (Uᵣ) höchstens 0,3 V beträgt.
